# EUROPEAN PATENT APPLICATION

(11) **EP 1 148 260 A1**
(43) Date of publication of application: **24.10.2001**
(21) Application number: 01303348.5
(22) Date of filing: 10.04.2001
(51) Int. Cl.: F16C 9/02

(54) **Bearings**

(30) Priority: 19.04.2000 GB 0009524
(71) Applicant: DANA CORPORATION, Toledo, OH 43615 (US)
(72) Inventor: Martin, John William, Dana Glacier Vandervell EU, Northwood Hills, Middlesex HA6 1LN (GB)
(74) Representative: Goddard, David John

(57) **Abstract**

A combination of a bearing and a housing (32) for the bearing is described, the combination comprising two substantially semi-cylindrical half bearings (44,46) each retained in a corresponding housing (32,34) part about a joint face split-line wherein the housing (32) has at least one, locking plate (40) inserted in said joint face split-line, the at least one locking plate (40) extending over the whole of the joint face area and extending radially inwardly to lie between opposed joint faces of the two bearing halves (44,46), at least one of the two bearing halves (44,46) having a recess (102) at the joint face to receive a projection (100) on the locking plate (40).

## Description

The present invention relates to half-shell bearings for internal combustion engines.

Half-shell sliding bearings generally employ a so-called "nick" or "notch" to provide axial location of the bearing shells in their housings, usually in either the connecting rod (conrod) housings and/or the main bearing housings, in the engine. The nick is a small portion of the bearing wall adjacent the joint face, either at one end face or intermediate the bearing end faces, which is sheared and moved in a radially outwardly direction relative to the bearing circumference and which locates in a machined recess in the bearing housing. As mentioned above, the purpose of the nick is to provide accurate axial location of the bearing in its housing and, in some cases, to provide a fool-proof assembly method, for example, to prevent a cap half-shell being fitted to the block and vice versa where the two half shells differ. The nick is not intended to prevent rotation of the bearing within the housing, rotation being prevented in most cases by the degree of interference between the bearing back and the housing. Interference is provided by making each half bearing slightly longer in its circumferential length than the housing into which is fitted. Thus, the joint faces of the bearings stand slightly proud of the housing and when the two housing halves are bolted together, the joint faces are compressed against each other forcing the bearing halves into their respective housings and causing a small degree of plastic deformation. The excess bearing circumferential length is known as "crush".

However, it is becoming increasingly common for production engines to employ "nickless" bearings.

The absence of a nick presents problems in the case of racing engines. Racing engines operating at high rotational speeds suffer from distortion of the housing due to the high loads generated and in this instance the nick not only provides axial location but also does provide some measure of resistance to circumferential movement of the bearing shells relative to their housing. Racing engine designers are not, therefore, prepared to use nickless bearings in racing engines. In some racing applications bearings employing two nicks are used.

Where rotation of the bearing has been experienced, fracture of the nick portion can occur and there is a case for nicks having an increased projected area to resist rotational force to be used, however, for manufacturing reasons this is rarely possible.

There are however disadvantages in having a nick in the bearing and these disadvantages are accentuated in the case of racing engines.

Firstly, the recess in the bearing bore due to the nick can cause breakdown of the hydrodynamic oil film supporting the bearing which oil film, in any case, is frequently significantly thinner than on normal production engines.

Secondly, the presence of the nick disrupts the bearing joint face and therefore causes a localised region of poor clamping between the bearing halves with a consequential reduction in contact pressure on the bearing back in this area.

Thirdly, the recess required in the bearing housing to accommodate the nick can act as a stress raiser and cracking in this region between the recess and the bolt hole may occur. Again, this particular problem is exacerbated in racing engines due to the greater stresses involved.

US-A-2 082 944 describes an arrangement whereby the cap half of a connecting rod is machined in the joint face region to form a trough to receive a locking member or key which lies between one pair of joint faces of two bearing half shells. However, the arrangement shown wherein the meeting pair of joint faces are machined so as to receive an edge of the locating member on one half of the joint face only, causes the other pair of joint faces to be displaced rotationally away from the joint face parting line between the connecting rod half and the cap half of the housing. The arrangement shown also has the serious disadvantage that virtually perfect accuracy of the machined trough is rquired so that there is an even pressure distribution over the whole of the joint face area. Furthermore, extreme accuracy is also required in the portion of the mating bearing joint faces which are machined so as to receive the locating member. In a modern, high revving racing engine such an arrangement would place unnecessary strains and stresses on the bearing and housing assembly in the joint face region.

Our co-pending British patent application, number GB-A-2 343 226, describes a bearing and housing assembly having means to prevent movement of a pair of half bearings, relative to their housings, in the circumferential direction. However, the assembly described does not have direct means for preventing relative movement of the bearings in the housing in the axial direction.

Thus, it is an object of the present invention to provide a bearing or a bearing and housing assembly wherein the bearing has greater resistance to rotation and axial movement relative to its housing whilst not incurring the above mentioned disadvantages of nicks.

According to a first aspect of the present invention, there is provided a combination of a bearing and a housing for the bearing, the combination comprising two substantially semi-cylindrical half bearings each retained in a corresponding housing part about a joint face split-line wherein the housing has at least one locking plate inserted in said joint face split-line, said at least one locking plate extending over substantially the whole of the joint face area and extending radially inwardly to lie between opposed joint faces of the two bearing halves, at least one of said two bearing halves having a recess at the joint face to receive a projection on said locking plate.

In the combination of bearing and housing according to the present invention the at least one locking plate extends over substantially the whole of the housing joint face area and has a hole therein for the retaining and clamping means, for example a bolt, to pass therethrough.

The bearing and housing assembly may have a locking plate on one half of the joint face or there may be a locking plate on both sides of the joint face split line about the bearing axis.

A dowel may also be provided in the joint face region to prevent angular displacement of the locking plate about the retaining bolt and ensure that the radial face of the at least one locking plate between the bearing joint faces remains substantially parallel to the bearing axis.

The thickness of the locking plate may be accommodated in several different ways.

The joint faces of the housing may be machined to accommodate the thickness of the locking plate and to ensure that the bore of the retained half-bearings remains truly circular. The bearing joint faces may also require machining in a corresponding manner.

In a first alternative method the housing parts and bearings may be used in their "standard" form except for being provided with a thicker layer of bearing material which is bored after assembly of the bearings into the housing with the locking plates in place. Such boring may take account of the need to provide a so-called overlay coating by electroplating, for example, after boring.

In a second alternative method the housing may be bored with "false" locking plates in place at the joint faces to produce a circular bore and assembled using standard bearings inserted with new locking plates, of the same thickness as the false locking plates, extending into the joint face region between the bearings.

Clearly, in all alternatives, the shaft journal diameter would be made to suit the actual bearing bore or *vice versa*.

In one embodiment the locking plates may be provided with bearing material applied to the radial end faces of the projections which face the co-operating shaft journal in use.

The locking plates may have one or more projections or tongues which extend into recesses formed in the bearing joint face regions so as to prevent movement of the bearing relative to the housing in both the circumferential and axial directions. The position of the tongue or tongues may be intermediate the axial end faces of the bearing or, where there are two tongues, at the bearing end faces, for example.

The at least one locking plate may secure the bearings at only one circumferential end thereof or at both circumferential ends.

According to a second aspect of the present invention, there is provided a bearing for use in the combination of bearing and housing according to the first aspect of the present invention.

In order that the present invention may be more fully understood, examples will now be described by way of illustration only with reference to the accompanying drawings, of which:
Figure 1 shows a perspective view of a conventional half-bearing shell;
Figure 2 shows a cross section of part of a schematic end view of a bearing and bearing housing according to a first embodiment of the present invention;
Figure 3 shows a schematic end view of a housing of a combination according to a second embodiment of the present invention;
Figures 4a and 4b show a third embodiment of a bearing and housing according to the present invention;
Figures 5a and 5b show a fourth embodiment of a bearing according to the present invention;
Figures 6a and 6b show a fifth embodiment of a bearing according to the present invention;
Figures 7a and 7b show a sixth embodiment of a bearing according to the present invention;
Figures 8a and 8b show a seventh embodiment of a bearing according to the present invention;
Figure 9 shows an eighth embodiment of a bearing according to the present invention.
Figure 10 shows a ninth embodiment of a bearing according to the present invention; and
Figure 11 which shows a tenth embodiment of a bearing according to the present invention.

Referring now to the drawings and where the same features are denoted by common reference numerals.

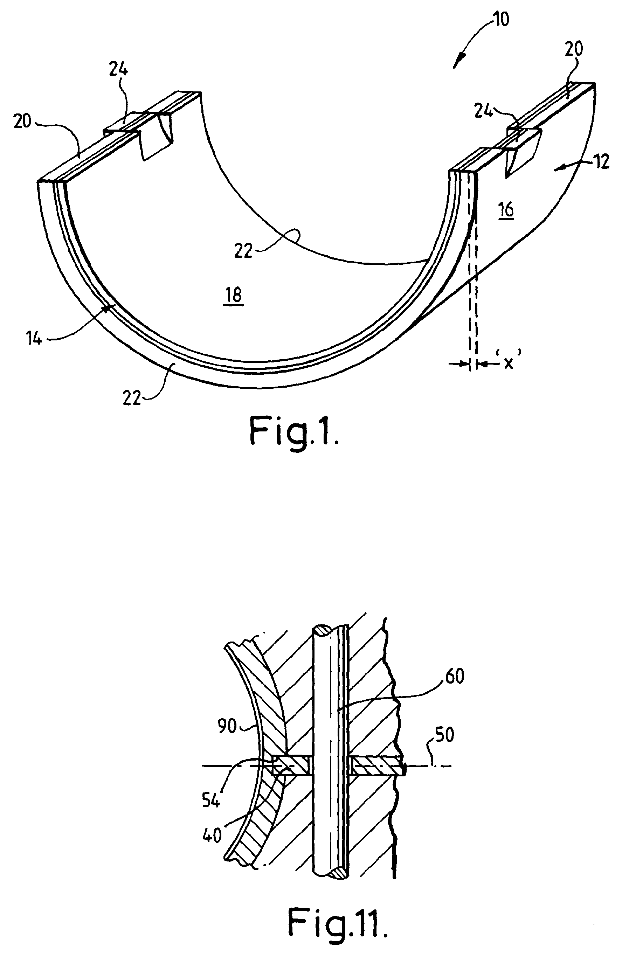

A conventional half-bearing for an internal combustion engine for example is indicated generally at 10 in Figure 1. As shown in Figure 1, the bearing 10 comprises a strong backing 12 from a material such as steel for example and a bearing alloy lining 14 bonded to the backing 12. The bearing back is indicated at 16 and the bore at 18. The joint faces are indicated at 20 and the bearing end faces at 22. A nick 24 is indicated on one joint face 20. The nick is frequently pressed from the wall material by shearing in a press tool so as to form a tongue which extends radially outwardly beyond the diameter of the bearing back 16 to locate in a recess (not shown) in a co-operating housing (not shown). The bearing free-spread is the excess diameter, measured at and in a direction parallel to a plane including the joint faces 20, indicated at "x", of the free-standing bearing greater than the diameter of the co-operating housing in which it is to fit.

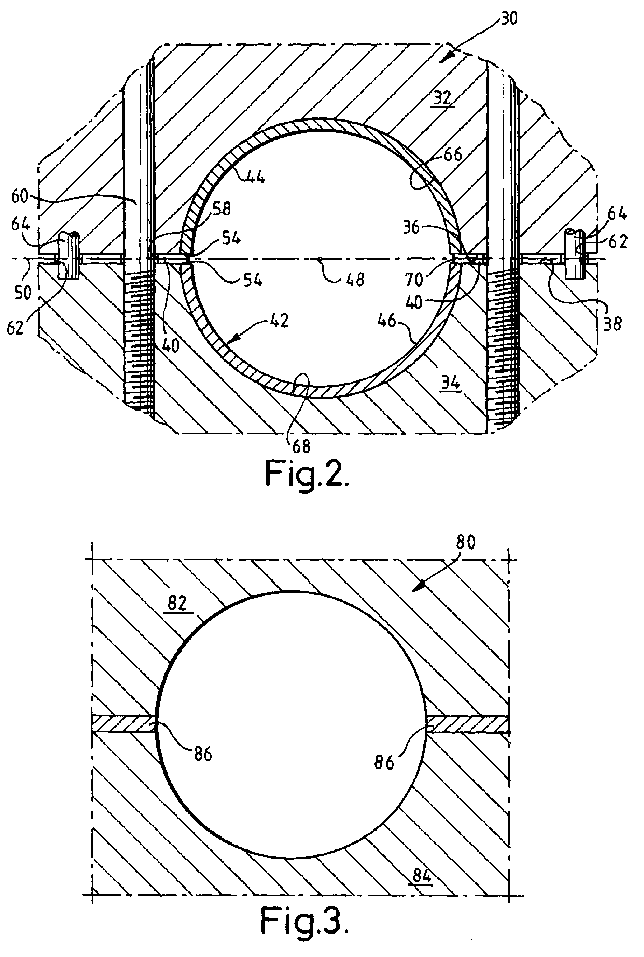

Figure 2 shows a cross section through part of a general schematic arrangement of a combination of a bearing and housing assembly according to the present invention and is indicated generally at 30 comprising an upper housing part 32 and a lower housing part 34 separated along joint faces 36, 38 respectively. Inserted between the joint faces are two locking plates 40, one on either side of the bearing 42 which itself comprises an upper half 44 and a lower half 46 and about the bearing axis 48. Reference numeral 50 indicates a plane passing through a diameter of the bearing assembly. The locking plates 40 extend into the region between the joint faces 54 of the bearing halves 44, 46. The locking plates extend substantially over the entire area of the housing joint faces and, in addition to a hole 58 allowing housing securing bolts 60 to pass therethrough, there are dowel holes 62 for locating dowels 64 provided to prevent angular displacement of the locking plates 40. The bores 66, 68 of the housing parts 32, 34 are initially circular without the locking plates 40 in place thus, the joint faces 36, 38 are relieved by machining such that the housing bore becomes circular again with the locking plates 40 in place. Similarly, the joint faces 54 of the bearing halves 44, 46 are also machined a corresponding amount, and also so as to preserve the "crush" (i.e that additional peripheral length of the bearing over that of its co-operating housing part), so as to generate sufficient interference between the housing and backs of the bearings. With the locking plates 40 extending into the bearing joint face region 54, it is not possible for circumferential or axial (as will be explained with reference to the embodiments described below) movement of the bearings 44, 46 relative to the housing 30.

Since a part of the end faces 70 of the locking plates 40 may be in close proximity to the shaft journal (not shown) they may be coated with a bearing material in case contact occurs. Such coating may be for example by cathodic sputter coating, electroplating or any other suitable technique such as high velocity oxy-fuel spraying. It is not necessary for the same bearing material as used on the running surfaces of the bearing halves 44, 46 to be employed as the locking plates will generally be located out of the zone(s) of highest load or hydrodynamic oil pressure.

Figure 3 shows the housing part of a second embodiment wherein the bore of a housing 80 comprising upper and lower parts 82, 84 respectively is machined circular with "false" locking plates 86 in place. After machining, the false locking plates 86 are removed and replaced by locking plates (not shown) of the same thickness as the false locking plates and similar to those 40 shown in Figure 2 and which extend into the joint face region between the bearing halves. In this embodiment production bearings which do not require machining of the joint faces may be used.

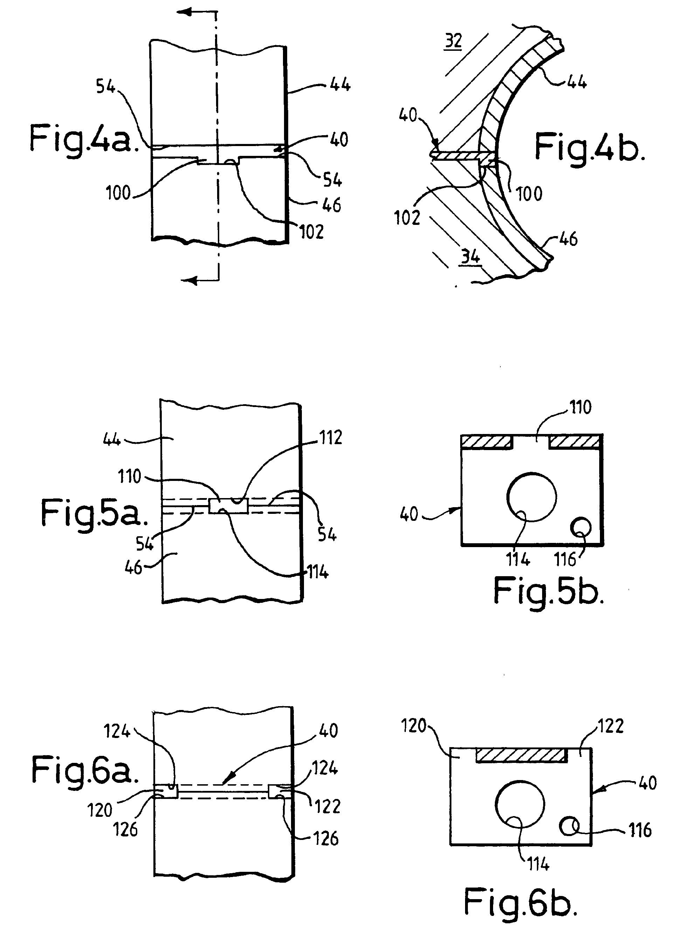

Figures 4a and 4b show an embodiment where the bearings 44, 46 are provided with a locking plate 40 which extends along the full axial length of the bearing joint faces, the plate 40 being provided with a downwardly directed peg portion 100 (see Fig 4a) which co-operates with a recess 102 in the joint face of the lower bearing 46. The opposite joint face (not shown) may also be provided with a similar locking plate having an upwardly directed peg portion co-operating with a recess in the joint face of the upper bearing half 44. Thus, both bearing halves 44 and 46 are prevented from moving circumferentially by the locking plate 40 between the bearing joint faces 54 and axially by the peg portion 100 in the recesses 102.

Figures 5a and 5b show an embodiment wherein only a single tongue 110 of the locking plate 40 (shown in plan view in Fig. 5b) extends through the bearing joint faces 54 and co-operates with recesses 112, 114 formed in the joint faces of the bearing halves 44, 46. The tongue 110 prevents both circumferential and axial movement of the bearings. Figure 5b shows a plan view of the locking plate 40 and the bolt hole 114 and dowel hole 116. In this embodiment, it may only be necessary for one locking plate to be present since the tongue 110 effectively secures both bearings 44, 46. However, from an ease of manufacturing and assembly standpoint, it may be advantageous to have a locking plate in each side of the housing.

Figures 6a and 6b show an embodiment similar to Figure 5 except that there are two tongues 120, 122 which extend between the joint faces 54 and co-operate with recesses 124, 126 formed in the bearing joint faces. The same comments relating to the embodiment of Figure 5 are equally relevant to this embodiment.

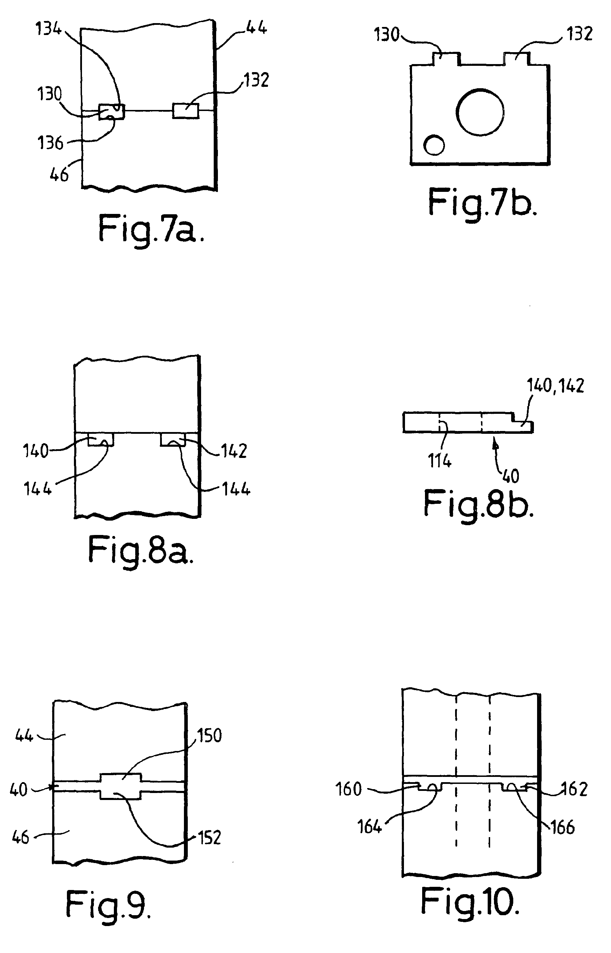

Figures 7a and 7b show a further embodiment similar to Figure 6 but having tongues 130, 132 inset from the bearing end faces and co-operating with recesses 134, 136 formed in both the upper 44 and lower 46 bearing halves. Comments applicable to Figures 5 and 6 are also applicable to this embodiment.

Figures 8a and 8b show an embodiment similar to that shown in Figure 7 but where tongues 140, 142 co-operate with recesses 144 formed in one half only. Figure 8b shows a side view of the locking plate 40 where it may be seen hat the thickness of the tongues 140, 142 is less than the total thickness of the locking plate. A second locking plate may be used in the opposite joint face (not shown) wherein recesses are formed in the other bearing half to co-operate with the tongues 140, 142.

Figure 9 shows an embodiment similar to that shown in Figure 4 but where there are pegging portions 150, 152 formed on both faces of the locking plate 40. Thus, both bearings are securely located against both circumferential and axial movement on both sides of the housing when a locking plate according to this embodiment is used on both sides of the housing.

Figure 10 shows a similar embodiment to that shown in Figure 4 but where there are two pegging portions 160, 162 engaging with recesses 164, 166 in the lower bearing half 46. The same comments made with reference to Figure 4 are also equally applicable to this embodiment. The embodiment of Fig. 10 may be modified in a similar manner to that of Fig. 9.

Figure 11 shows a modification wherein the joint faces 54 in the steel backing only are relieved to accommodate the locking plate 40. In this embodiment, the bearing alloy layer 90 is substantially uninterrupted at the joint face adjacent a shaft journal surface (not shown) . The embodiments shown in Figures 4 to 10 may be modified so as to only employ partial penetration of the steel backing of the bearing halves 44, 46 as in Fig. 11.

In Figure 11, the opposing joint face to that shown may not have the locking plate 40, i.e. the joint face may comprise the normal housing, a locking plate being present on only one side. In this regard, the embodiments shown at Figures 4 to 10 may also only have a locking plate at one side of the housing. However, it is preferred that locking plates are present on both sides of the housing about the bearing axis 48.

The tongues 110, 120,130, 142 in the embodiments shown in Figures 5, 6, 7 and 8, for example, are shown as rectangular, however, this need not necessarily be the case as other shapes may be used especially, where this would facilitate manufacture without compromising the objective of preventing axial and circumferential movement of the bearings in their housing.

The circumferential locking plates 40 may be made of any suitable material such as steel for example.

Although the present invention has been explained in the context of racing engines, bearings and housings according to the present invention may clearly be employed in many other types of engines where running conditions dictate improved bearing location within the housing.

## Claims

1. A combination of a bearing and a housing for the bearing, the combination comprising two substantially semi-cylindrical half bearings each retained in a corresponding housing part about a joint face split-line wherein the housing has at least one locking plate inserted in said joint face split-line, said at least one locking plate extending over substantially the whole of the joint face area and extending radially inwardly to lie between opposed joint faces of the two bearing halves, at least one of said two bearing halves having a recess at the joint face to receive a projection on said locking plate.

2. A combination of a bearing and housing according to claim 1 wherein the at least one locking plate extends over the housing joint face area and has a hole therein for a retaining and clamping bolt to pass therethrough.

3. A combination of a bearing and housing according to either claim 1 or claim 2 wherein there is a locking plate on both sides of the joint face split line about the bearing axis.

4. A combination of a bearing and housing according to any one preceding claim wherein there is a dowel provided in the joint face region to prevent angular displacement of the locking plate.

5. A combination of a bearing and housing according to any one preceding claim wherein the locking plates are provided with bearing material applied to their radial end faces which face a co-operating shaft journal in use.

6. A combination of a bearing and housing according to any one preceding claim wherein the at least one locking plate has one or more tongues which extend into recesses formed in the bearing joint face regions.

7. A combination of a bearing and housing according to claim 6 wherein the position of the tongue or tongues is intermediate the axial end faces of the bearing.

8. A combination of a bearing and a housing according to claim 6 wherein there are two tongues situated at the bearing end faces.

9. A combination of a bearing and housing according to any one preceding claim wherein the at least one locking plate extends between the bearing joint faces along substantially the whole of the axial length of the bearing and the projection extends in one circumferential direction only.

10. A combination of a bearing and housing according to claim 9 wherein the projections extend in both circumferential directions.

11. A combination of a bearing and housing according to any one preceding claim from 1 to 8 wherein the at least one locking plate extends between the bearing joint faces over only a part of the axial length thereof.

12. A combination of a bearing and housing according to claim 11 wherein the bearing joint faces touch each other over part of their length.

13. A combination of a bearing and housing according to any one preceding claim wherein recesses co-operating with said projections are formed in one bearing half only.

14. A combination of a bearing and housing according to claim 13 wherein the thickness of the projections is less than the thickness of the locking plate.

15. A bearing for use in the combination of a bearing and housing according to any one of preceding claims 1 to 14.

16. A combination of a bearing and housing substantially as hereinbefore described with reference to the accompanying description and any one of Figures 2 to 11 of the drawings.

17. A bearing for use in the combination of a bearing and housing substantially as hereinbefore described with reference to the accompanying description and any one of Figures 2 to 11 of the drawings.
